# EUROPEAN PATENT SPECIFICATION

(11) **EP 0 534 543 B1**
(45) Date of publication and mention of the grant of the patent: **17.12.1997**
(21) Application number: 92202876.6
(22) Date of filing: 19.09.1992
(51) Int. Cl.: C08G 65/48, C08L 71/12, C08L 77/00, C08L 69/00, C08L 67/00

(54) **Polyphenylene ether containing reactive end groups, process for preparing it and relevant thermoplastic compositions**
Polyphenylenether enthaltend reaktive Endgruppen, Verfahren zur Herstellung und deren thermoplastische Mischungen
Polyphénylène éther contenant des groupes terminaux réactifs, procédé de préparation et compositions thermoplastiques qui les contiennent

(30) Priority: 24.09.1991 IT MI912530
(43) Date of publication of application: 31.03.1993
(73) Proprietor: ENICHEM S.p.A., 20124 Milano (IT)
(72) Inventor: Fiore, Leonardo, I-20151 Milan (IT); Bencini, Elena, I-46030 Virgilio (Mantova) (IT); Ghidoni, Dario, I-46023 Gonzaga (Mantova) (IT); Borghi, Italo, I-44100 Ferrara (IT)
(74) Representative: Fusina, Gerolamo

(56) References cited:
- EP-A- 0 226 910
- EP-A- 0 338 209
- EP-A- 0 403 023

## Description

The present invention relates to polyphenylene ether containing reactive end groups, to the process for preparing it and to the relevant polymeric compositions.

More in particular, the present invention relates to polyphenylene ether containing reactive end groups of ether type, to the process for preparing it and to the relevant polymeric compositions.

The polyphenylene ether resins represent a well known family of engineering polymers, characterized by good and balanced properties such as hydrolytic stability, dimensional stability, thermal resistance and dielectrical properties.

This combination of properties makes the polyphenylene ether resins suitable for use in a variety of applications by means of injection or extrusion molding techniques.

In spite of these numerous possible commercial applications of the polyphenylene ether resins (PPE), their utilization is limited due to their poor processability mainly attributable to the low fluidity in the molten state and to the narrow range of workability which can cause some difficulties during the extrusion and injection molding operations.

A further drawback is that the polyphenylene ether resins show a poor solvent resistance after molding and a low resiliency (IZOD), thus the use thereof for certain applications is further limited. In fact, it is known that these resins swell or are soluble in acetone, toluene and halogenated hydrocarbons, for this reason they cannot be used for these parts which have a chance to contact with an organic solvent.

On the other hand, it is known that the polyamides are engineering polymers having good properties in organic solvent resistance, while they are lacking in many other properties. It is known, in fact, that the polyamide such as, for example, Nylon 6 or 66, have a high moisture absorption, a worse water resistance, a worse dimensional stability and a low heat deformation temperature.

For these reasons, polyphenylene ether and polyamide resins are very different from each other and it is expected that a polymeric alloy obtained by the combination of these two resins have interesting properties since the lacking properties of one of the resins could be compensated by the properties of the other resin.

Japanese Patent Publication No. 997/1970 proposes a polymeric composition consisting of a polyphenylene ether and a polyamide for the purpose of improving the fluidability of the polyphenylene ether.

However, owing to the quite worse compatibility between these two resins, the resulting blends very often delamine, especially when the amount of the polyamide is relatively high, and their physical-mechanical properties are of low level and lower than those of the component materials.

Numerous methods for making the polyphenylene ethers compatible with the polyamides have been proposed and developed.

Thus, for example, Japanese Patent Publication No. 84/66452 describes the modification of the polyphenylene ether with an olefinic or acetylenic carboxylic acid or anhydride, such as maleic anhydride, itaconic anhydride and phthalic acid.

A very effective way consists in the formation of a copolymer of the two resins. This may be achieved by the incorporation of a polyamide-reactive functional group on the chain of the polyphenylene ether.

Groups suitable for this purpose include carboxylic acid or anhydride groups, such as, for example, described in Japanese Patent No. 59-66452 and in U.S. Patent Nos. 4,600,741 and 4,732,938.

Another particularly suitable polyamide-reactive functional group is the epoxy-group. Various methods of attaching epoxy groups to polyphenylene ether have been disclosed in various patents and publications. Thus, for example, U.S. Patent No. 4,460,743 describes the reaction of a polyphenylene ether with epichlorohydrin; U.S. Patent No. 4,732,937 the reaction with terephthaloyl chloride and glycidol; European Patent No. 347,539 the reaction with epoxychlorotriazine.

EP-A-0 338 209 describes thermoplastic moulding compositions comprising polyamides and polyphenylene ethers with imide end groups.

The functionalization of the polyphenylene ether by the above reported methods requires a large amount of monomers and some of them are toxic. The reactions very often are accompanied with homopolymerization of the epoxy-funzionalized monomers and it is necessary to remove such homopolymers by complex operations. Furthermore, the polyphenylene ethers functionalized by the above-reported groups most often have a not satisfactoring thermal stability and resistance to the hydrolysis.

It has now been discovered by the Applicant a new class of polyphenylene ether resin derivatives, which besides being very reactive with the polyamides to form compatible and ductile compositions in all the proportions, are endowed with a high thermal stability and resistance to the hydrolysis.

The new class of derivatives, subject matter of the present invention, is represented by polyphenylene ether containing ether end groups of formula: 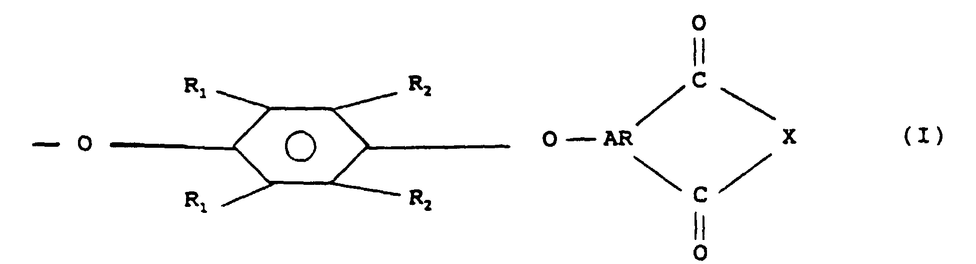 wherein:
each R₁ is independently a halogen atom, a primary or secondary alkyl radical containing from 1 to 7 carbon atoms, a substituted alkyl radical, phenyl, substituted phenyl, a C₁ - C₇ alkyloxy radical, or a haloalkyloxy wherein at least two carbon atoms separate the halogen and oxygen atoms;
each R₂ is independently hydrogen, a halogen atom, a primary or secondary alkyl radical containing from I to 7 carbon atoms, a substituted alkyl radical, phenyl, substituted phenyl, a C₁ - C₇ alkyloxy radical, or a haloalkyloxy as defined for R₁;
AR is phenylene or an aromatic radical constituted by 2 or 3 condensed rings; and
X is N-R₃ wherein R₃ represents hydrogen, a monovalent organic radical selected from the group consisting of an alkyl group containing from 1 to 10 carbon atoms, preferably from I to 4 carbon atoms, a cyclo-alkyl radical containing from 3 to 8 carbon atoms and an aromatic radical having from 6 to 20 carbon atoms.

Preferred radicals included by R₃ are, for example, hydrogen, methyl, ethyl, propyl and butyl, cyclohexyl, phenyl, tolyl, xylyl, naphthyl and 4-ethyl-phenyl.

The polyphenylene ether containing ether end groups of formula (I) can be prepared by reacting a polyphenylene ether salt with an aromatic nitro-derivative of formula: 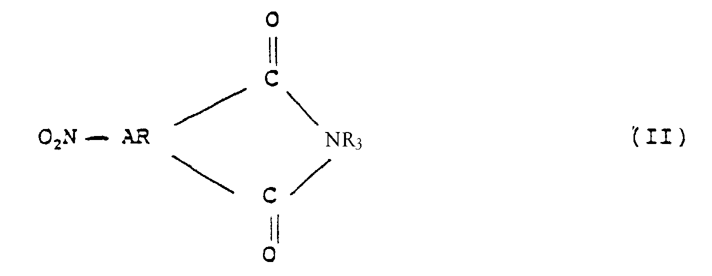 wherein AR and R₃ have the above reported meanings, in the presence of an organic polar aprotic solvent and at a temperature ranging from 100°C to the boiling temperature of the solvent.

The polyphenylene ether salt can be a metal salt, especially an alkali or alkaline earth salt such as the lithium, sodium, potassium, magnesium or calcium salt; most often the sodium salt by reason of its availability. The polyphenylene ether salt can also be a tetraalkylammonium salt, preferably one in which the alkyl groups contain up to 4 carbon atoms, such as for example a tetramethylammonium salt.

The site of salt formation is the terminal hydroxy groups.

The salt may be easily prepared according to conventional known techniques, for example by reacting the polyphenylene ether with a suitable base such as lithium hydroxide, sodium hydroxide, potassium hydroxide, magnesium hydroxide, calcium hydroxide, sodamide, sodium hydride, a sodium alkoxide or tetramethylammonium hydroxide.

To ensure quantitative formation of the polyphenylene ether salt, it is frequently advantageous to employ a highly colored basic compound and to titrate the polyphenylene ether by adding said compound until its color persists in the reaction mixture. Suitable highly colored compounds are the alkali metal benzophenone ketyls and alkali metal salts of triphenylmethane, disclosed in U.S. Patent Nos. 3,402,143 and 3,703,564. The formation of the polyphenylene ether salt may generally be conveniently achieved in solution in an organic solvent such as toluene xylene, chlorobenzene, o-dichlorobenzene or dichlorotoluene.

The aromatic nitro-derivatives of formula (II), which may be used in the preparation of the polyphenylene ether containing ether end groups of formula (I), include: N-methyl-4-nitro phthalimide and N-ethyl-4-nitro-phthalimide, N-propyl-4-nitro-phthalimide, the corresponding products containing the nitro group in position 3, 5-nitro-N-methyl-1,8-naphthalimide and 5-nitro-N-methyl-2,3-naphthalimide.

These aromatic nitro-derivatives are well known on the market and may be easily prepared according to the processes described, for example, in U.S. Patent Nos. 4,116,980; 3,933,852; 3,879,428; 3,874,867; 3,787,475 and 4,902,809.

Any aprotic and higly polar organic solvent may be used in the preparation of the polyphenylene ether containing ether end groups of formula (I).

Examples of such solvents include: dimethylsulfoxide, dimethylformamide, dimethylacetamide, hexamethylphosphoramide and N-methylpyrolidone. The dimethylsulfoxide is preferred since it allows to obtain the best results and with short reaction times. The amount of solvent is not critical even if solvent/polyphenylene ether salt weight ratios comprised between 1:1 and 10:1 are generally used.

The molar ratio of the polyphenylene ether salt to the nitro-derivatives of formula (I) may be varied over a fairly wide range; preferably it is comprised between 0.1 and 10, depending upon the required functionality degree.

The reaction time may vary over a fairly wide range and generally it is comprised between 10 and 200 hours depending upon the reaction temperature which preferably is near the boiling temperature of the solvent.

The polyphenylene ether containing ether end groups of formula (I) can be recovered from the reaction mixture by a variety of procedures. One procedure, for example, can be by allowing the reaction mixture to cool and to recover the ether end group containing polyphenylene ether by filtration.

It is preferred, however, to precipitate the polyphenylene ether containing ether end groups by using a precipitating solvent such as, for example, methanol, followed by a standard recovery technique, such as filtration, or by removal of the solvent under reduced pressure.

The polyphenylene ether is a well-known polymer or copolymer which comprise a plurality of structural units having the formula : 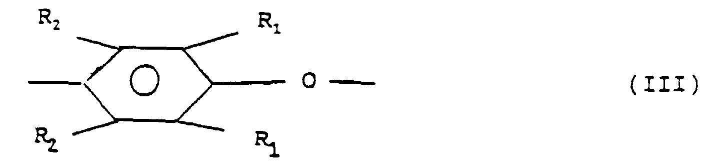 wherein R₁ and R₂ have the above reported meanings.

Examples of R₁ and R₂ include a halogen such as chlorine, bromine or fluorine, an alkyl radical or a substituted alkyl radical such as methyl, ethyl, n- and isopropyl, n-, sec-, iso- and tert- butyl, n-amyl, n-hexyl, 2,3-dimethylbutyl, chloro-ethyl, hydroxyethyl, phenylethyl, hydroxymethyl, carboxy-ethyl, methoxycarbonylethyl, cyanoethyl, aryl or substituted aryl radical such as phenyl, chlorophenyl, methylphenyl, dimethylphenyl, ethylphenyl, a benzyl radical.

R₂ can also be hydrogen.

These polymers and the processes for preparing them are broadly described in literature. As an example, reference is made to U.S. Patent Nos. 3,226,361; 3,234,183; 3,306,874; 3,306,875; 3,257,357; 3,257,358.

Polyphenylene ethers preferred in the present invention are those having formula: 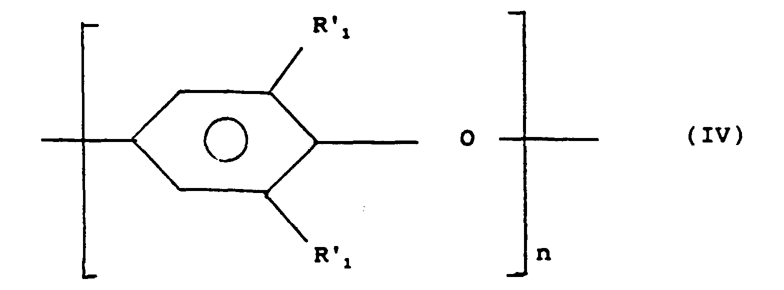 wherein R'₁ independently are an alkyl radical containing from 1 to 4 carbon atoms and n is at least 50 and preferably comprised between 60 and 600.

Illustrative examples of polyphenylene ethers which are particularly suitable for the present invention are:
- poly(2,6-dimethyl-1,4-phenylene)ether;
- poly(2,6-diethyl-1,4-phenylene)ether;
- poly(2-methyl-6-ethyl-1,4-phenylene)ether;
- poly(2,6-dipropyl-1,4-phenylene)ether;
- poly(2-ethyl-6-propyl-1,4-phenylene)ether;
- poly(2,6-dimethyl-1,4-phenylene)ether is the most preferred.

The term "polyphenylene ether", whenever used in the present specification and in the claims, includes both the homopolymers and the copolymers containing the structural units of formula (III) indicated hereinbefore, such as, for example, the copolymers comprising units deriving from 2,6-dimethylphenol and 2,3,6-trimethylphenol; as well as the grafted copolymers prepared by grafting one or more vinyl monomers such as acrylonitrile or vinylaromatic compounds such as styrene or polymers such as polystyrene or elastomers onto the polyphenylene ether chain.

The polyphenylene ethers generally have an average molecular weight (determined by gel permeation chromatography) ranging from 5,000 to 120,000, and their inherent viscosity is higher than 0.1 dl/g and preferably ranges from 0.30 to 0.90 dl/g, measured in chloroform at 23°C.

These polyphenylene ethers can be produced by oxidation of a phenol compound with oxygen or an oxygen-containing gas, preferably in the presence of a catalyst for the oxidative coupling. Any known catalyst suitable for the oxidation polymerization can be utilized. Generally they contain at least a compound of a heavy metal such as copper, manganese or cobalt usually in combination with other types of catalytic compounds. Examples of suitable catalysts are the ones containing a cupreous or cupric salt such as, for example, a cuprous salt in combination with a tertiary amine and/or a secondary amine, such as, for example, copper(I)chloride-trimethylamine and dibutylamine ,copper(I)acetate-triethylamine or copper(I)chloride-pyridine; or a cupric salt in combination with a tertiary amine and a hydroxide of an alkaline metal, such as, for example, copper(II)chloride-pyridine-potassium hydroxide; these catalysts are described, for example, in U.S. Patent Nos. 3,306,874; 3,914,266 and 4,028,341.

Another class of suitable catalyst are the ones containing manganese or cobalt, very often complexed with one or more chelating and/or complexing agents such as dialkylamines, alkanoamines, alkylenediamines, o-hydroxyaromatic aldehydes, omega-hydroxyazo compounds, omega-hydroxy-oximes, omega-hydroxy-aryl-oximes and beta-diketones. All these catalysts are well known in literature and are described, for examples, in U.S. Patent Nos. 3,956,242; 3,962,181; 3,965,069; 4,075,174; 4,093,595-8; 4,102,865; 4,184,034; 4,385,168.

The polyphenylene ether containing reactive ether end groups of formula (I), subject matter of the present invention, forms compatible and ductile thermoplastic compositions with all the nucleophilic engineering polymers, mainly with polyesters, polyamides and polycarbonates; moreover it can be used as a compatibilizing agent between the polyphenylene ether as such and a nucleophilic engineering polymers of the above reported type.

Another aspect of the present invention is, therefore, thermoplastic compositions comprising a polyphenylene ether containing ether end groups of formula (I).

Particularly, the thermoplastic compositions comprising (A) a polyphenylene ether, (B) a polyphenylene ether containing ether end groups of formula (I), and (C) a nucleophilic engineering polymer selected from a polyester, a polyamide and a polycarbonate form also the subject matter of the present invention.

In the compositions the amount of the polyphenylene ether containing ether end groups of formula (I) can vary over a wide range depending on the desired properties. This amount is generally comprised between 0.1 and 100 parts by weight with respect to 100 parts by weight of polyphenylene ether (A), preferably between 1 and 50 parts by weight.

The composition constituted by polyphenylene ether (B) containing ether end groups of formula (I) and polyphenylene ether (A) can be obtained directly during the reaction phase between the polyphenylene ether salt and the aromatic nitro-derivative of formula (II) by appropriately regulating the ratio between the two reactants and/or the reaction conditions.

The nucleophilic engineering polymer is used in an amount variable depending on the desired properties of the resulting composition. Generally, the nucleophilic engineering polymer is used in an amount comprised between 5 and 95%, preferably between 10 and 70% with respect to the total weight of complete composition.

Polyesters suitable for the preparation of the compositions of the present invention are thermoplastic resins having an inherent viscosity of at least 0.4 dl/g (measured in a mixture 1/1 of phenol/tetrachloroethane), obtained by polymerrization of an aromatic or cycloaliphatic bicarboxylic acid with a diol of formula:

HO - R -OH (V)

wherein R is a straight or branched alkylene radical containing from 2 to 20 carbon atoms or a arylene or cycloalkylene radical containing from 6 to 20 carbon atoms.

Examples of preferred bicarboxylic acids are terephthalic acid, isophthalic acid and cyclohexane-1,4-bicarboxylic acid; examples of preferred diols are ethandiol, propandiol, butandiol and hexandiol.

Some examples of preferred saturated polyesters are poly(ethylene-terephthalate), poly(propylene-terephthalate), poly(butylene-terephthalate) and poly(hexamethylene-cyclohexane-1,4-bicarboxylate) and their mixtures.

The term polyester includes also the elastomeric polyesters, polyarylates and the relevant copolymers such as copolyestercarbonates.

Suitable polyamides include those prepared by polymerization of monoamino-monocarboxylic acids or the corresponding lactams having at least two carbon atoms between the amino group and the carboxylic group; or by polymerization of substantially equimolar amounts of a diamine which contains at least two carbon atoms between the aminic groups and a bicarboxylic acid; or also by polymerization of a monoamino-monocarboxylic acid or a lactam thereof, as above defined, along with a substantially equimolar amount of a diamine and of a dicarboxylic acid. The dicarboxylic acid can be utilized in the form of a derivative thereof such as, for example, an ester or an acid chloride.

Examples of monoamino-monocarboxylic acids or lactams thereof, which are utilizable for preparing the polyamides, comprise the compounds containing from 2 to 16 carbon atoms between the aminic group and the carboxylic group, said carbon atoms forming a ring including the -CO-NH- group in the case of lactams. Typical examples of aminocarboxylic acids and lactams are: omega-aminocaproic acid, butyrolactam, pivalolactam, caprolactam, capryl-lactam, enantolactam, undecanolactam, dodecanolactam, 3- and 4-amino-benzoic acid.

Diamines which are suitable for being utilized in the preparation of the polyamides comprise aliphatic alkyldiamines having a straight or branched chain, aryldiamines and alkylaryl-diamines.

Examples of diamines are: trimethylene diamine, tetramethylene diamine, pentamethylene diamine, octamethylene diamine and, especially, hexamethylene diamine, as well as trimethylhexamethylene diamine, meta-phenylene diamine and metaxylilene diamine.

The dicarboxylic acids can be either aliphatic or aromatic. Among the aromatic acids, isophthalic acid and terephthalic acid are to be cited; and among the aliphatic acids those having at least 2 carbon atoms and, preferably, from 2 to 18 carbon atoms such, as for example, sebacic acid, octadecan-dioic acid, suberic acid, glutaric acid, pimelic acid and adipic acid.

Typical examples of polyamides or nylons, as usually are called, are: nylon 6; nylon 6,6; nylon 11; nylon 12; nylon 4,6; nylon 6,10 and nylon 6,12; nylon 6 and nylon 6,6 are preferred.

Partially aromatic polyamides, block polyamides of the type (X-Y)ₘ and X-Y-X, in which X is a polyamide block and Y is a polyalkylene glycol block, as well as the resilient or super-resilient polyamides obtained by blending the conventional polyamides with an elastomeric polymer or copolymer can be also utilized in the compositions of the present invention. A class of suitable block polyamides is sold by ATOCHEM under the trade mark PEBAX^{R}.

The average molecular weight of the polyamides is advantageously higher than 10,000, and preferably higher than 15,000 and up to 60,000, and the melting point thereof is preferably higher than 200°C.

The aromatic polycarbonates which can be used in the compositions of the present invention can be homopolymers or copolymers derived from the reaction between phosgene and bisphenol or between diphenyl-carbonate and bisphenols.

The bisphenols are of general formula: 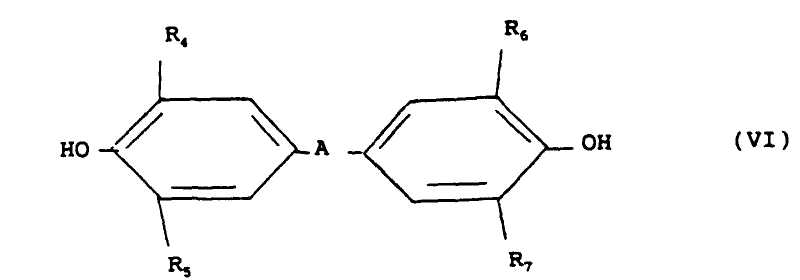 wherein each of R₄, R₅, R₆, R₇ independently represents hydrogen, an alkyl radical containing from 1 to 4 carbon atoms or one halogen, and A represents -O-, -CO-, -SO₂-, an alkylene radical containing from 2 to 10 carbon atoms optionally halogen substituted, an alkylidene radical containing from 2 to 10 carbon atoms optionally halogen substituted, a cycloalkylene radical containing from 5 to 15 carbon atoms, a cycloalkylidene radical containing from 5 to 15 carbon atoms or the radical:

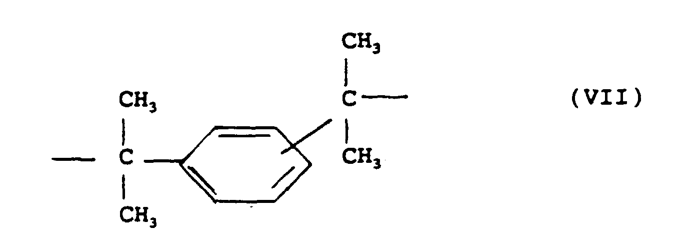

Particularly preferred polycarbonates are those based on 2,2-bis-(4-hydroxyphenyl)propane or on 2,2-bis-(3,5-dimethyl-4-hydroxyphenyl)propane alone or in mixture with each other or with one of the above reported bisphenols.

Polycarbonates containing in the chain units deriving from terephthalic and/or isophthalic acid are utilizable as well.

The aromatic polycarbonates, used in the mixture of the present invention have an average molecular weight of at least 10,000, more specifically ranging from 10,000 and 200,000 and preferably between 20,000 and 80,000, as determined by measurement of relative viscosity in CH₂Cl₂ at 25°C and with a concentration of 0.5% by weight.

The aromatic polycarbonates are well known in the art and are commercially available from different sources, for example: from General Electric Company, Mass., USA with the trade name LEXAN^{R} ; from ANIC S. Donato Milanese (Milano) with the trade name SINVET^{R} etc.

It is within the scope of the present invention to include into the thermoplastic compositions a polymeric modifier compatible with the polyphenylene ether and the engineering polymer, in order to improve the physical properties, particularly the resilience or the impact resistance.

The amount of the polymeric modifier can preferably range from 5 to 50 parts by weight with respect to 100 parts by weight of the composition (A) + (B) + (C) or (B) + (C). These modifiers are well known in the art and typically derive from one or more monomers selected from the group consisting of olefins, vinyl aromatic monomers, acrylic or alkylacrylic acids and their ester derivatives as well as conjugated dienes.

Particularly preferred modifiers are the rubbery high-molecular weight materials including natural and synthetic polymeric materials showing elasticity at room temperature. These modifiers can be homopolymer and copolymer, including random, block, radial block, grafted and core-shell copolymers as well as combinations thereof.

Specific examples of polymeric modifiers include: high density polyethylene, medium density polyethylene and low density polyethylene, linear low density polyethylene, polypropylene, poly(1-butene), propylene-ethylene copolymers, copolymers of ethylene with other copolymerizable monomers such as vinyl acetate, acrylic acid or methacrylic acid as well as the ester derivatives thereof such as ethyl acrylate or methylmethacrylate; ionomer resins containing side carboxylic groups which can be wholly or partially neutralized with metal ions.

Examples of rubbery polymeric modifiers are vinylaromatic monomer-hydrogenated, partially hydrogenated or not-hydrogenated conjugated diene block polymers, including SB and SBS type block polymers, such as polystyrene-polybutadiene, polystyrene-polyisoprene, polystyrene-polybutadiene-polystyrene, polystyrene-polyisoprene-polystyrene, poly(alpha-methylstyrene)-polybutadiene, poly(alpha-methylstyrene)-polyisoprene-poly(alpha-methylstyrene), as well as the polystyrene-ethylene-propylene rubbery block polymers (SEP); such rubbery polymers are available commercially from Phillips under the tradename SOLPRENE, from SHELL Company under the tradenames CARIFLEX, KRATON D or KRATON G.

Other types of rubbery modifiers which can be used in the compositions of the present invention are polybutadiene, butadiene-styrene copolymers, poly(chlorobutadiene), ethylenepropylene-diene monomer (EPDM), or the core-shell graft copolymers copolymers having the core constituted by a conjugated diene or a cross-linked acrylic rubber and one or more shells polymerized thereon and derived from a vinyl aromatic monomer and/or acrylic monomer alone or in combination with other vinyl monomers. Such core-shell copolymers are well known and available commercially with the tradenames PARALOID EXL 3300 and EXL 2607 of Rohm & Haas and described in U.S. Patent Nos. 3,808,180; 4,034,013; 3,096,202; 4,180,494 and 4,292,233.

The rubbery polymeric modifier can be too an olefinic elastomer containing a vinyl aromatic polymer grafted thereon, in which the olefinic elastomer is a rubbery copolymer, having a Mooney viscosity ranging from 10 to 150 ML-4 at 100°C, of at least two different straight chain alpha-mono-olefins such as ethylene, propylene, butene-1 and octene-1 with at least another copolymerizable monomer, generally a polyene, and typically a non-conjugated diene. Preferably one of the alpha mono-olefins is ethylene togheter with another alpha mono-olefin having a longer chain. The weight ratio of the ethylene to the other alpha-mono-olefin in the rubbery copolymer is usually in the range of from 20/80 to 80/20. Particularly preferred copolymers are the ethylene-propylene-non conjugated diene terpolymer in which the non-conjugated diene can be cyclic or acyclic such as: 5-methylene-2-norbornene, 5-isopropylidene-2-norbornene, 1,4-pentadiene, 1,4-hexadiene, 1,5-hexadiene, 1,5-heptadiene, 1,7,9-dodecatriene, methyl-1,5-eptadiene, 2,5-norbornadiene, cyclo-1,5-octadiene, dicyclopentadiene, tetrahydroindene, 5-methyl-tetrahydroindene. The diene content ranges from about 2 to 20% by weight and, preferably, from 8 to 18% by weight of diene monomeric units in the rubbery terpolymer. Particularly interesting results are obtained by using a rubbery terpolymer having a Mooney viscosity (ML-4), determined at 100°C, ranging from 30 to 90 , and a iodine number higher than 5, preferably ranging from 10 to 40.

The vinyl aromatic polymer grafted on the olefinic elastomer includes monomeric units of formula (VIII): 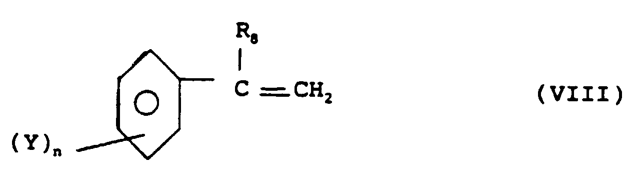 wherein:
R₈ represents a hydrogen, a halogen or an alkyl radical having from 1 to 4 carbon atoms;
Y represents a hydrogen, a halogen or an alkyl radical having from 1 to 4 carbon atoms and
n is 0 or an integer comprised between 1 and 5.

Examples of vinyl aromatic monomers having the above-reported general formula are: styrene; methylstyrene; mono-, di-, tri-, tetra-, and penta-chlorostyrene and the corresponding alpha-methyl-styrenes; styrenes and corresponding alphamethyl styrenes which are alkylated in the nucleus such as ortho- and para-methylstyrenes; ortho- and para ethylstyrenes; ortho- and para-methyl-alpha-methylstyrenes.

These monomers can be utilized either alone or in admixture with one another.

It is understood that in the grafting polymerization not all the vinyl aromatic monomer is really grafted on the rubbery substrate; a portion of the monomer forms a free polymer which is present in physical admixture with the grafted polymer.

Preferably, the average molecular weight of the vinyl aromatic polymer favourably influences the impact strength characteristics of the mixtures. Thus, for example, good impact strength results are obtained with vinylaromatic polymers having a molecular weight higher than 100,000 and up to 2,000,000.

The amount of vinyl aromatic monomer grafted on the olefinic elastomer is not critical and generally ranges from 10 to 50% by weight with respect to the grafted elastomer; while the amount of free vinyl aromatic polymer ranges from 10 to 50% by weight.

The amount of grafted monomer on the polymer can be determined by extraction of the product with a solvent of the not-grafted resin.

In addition to components A, B, and C, the compositions of the present invention can contain reinforcing additives such as for example glass fibres, carbon fibres, organic and inorganic high-modulus fibres, metal fibres, inorganic fillers, as well as antiflame agents, dyestuffs, pigments, stabilizers, lubricants, which are well-known to those skilled in the art.

The reinforcing additives can be used in amounts generally not exceeding 50% by weight and, preferably, not higher than 30% by weight calculated on the total composition.

Particularly preferred reinforcing additives are the glass fibres, which can be untreated or, better, treated with silanes or titanates, as it is well-known to the technicians and to the manufacturers of said fibres.

Suitable stabilizers to be used in the compositions of the present invention comprise many of the known thermal stabilizers and antioxidants and generally utilized for the specific engineering polymer,the polyphenylene ether resins or the polymeric modifiers. For example, liquid phosphates and hindered phenols can be added to the compositions of the present invention, in amounts which can range from 0.05 to 5% by weight.

The method for producing the compositions of the present invention is not critical and any conventional method is utilizable.

Generally, the mixing is carried out in the molten state and time and temperature are selected and determined time-to-time as a function of the composition. The temperatures are generally in the range of from 200 to 300°C.

Any known mixing unit can be utilized. The method can be continuous or discontinuous. Specifically, single-screw and two-screw extruders, Banbury type inner mixers and mixing rollers can be used.

Although all the composition components can be introduced at the beginning and directly into the mixing unit, in some cases it is preferable to completely or partially pre-mix one of the two resins, preferably polyphenylene ether, with the polymeric modifier.

The compositions which are the subject matter of the present invention are easily processable by injection molding or by extrusion and exhibit a complex of properties which make them suited to be utilized for the manufacture of shaped articles having a high impact strength along with a good thermal stability and a low water sensitivity. Thanks to these properties, the compositions of the present invention find the use in the automotive sector, for the manufacture of articles which can be furnace-painted, parts which enter into contact with motors, houshold electric apparatus, electronic articles and technical articles in general in the form of cups, boxes, containers, panels, sheets, rods.

In order to better understand the present invention and to reduce it to practice, a few illustrative examples are given hereinafter, which however are not limitative of the scope of the invention.

### EXAMPLES 1 to 7

### Preparation of the polyphenylene ether containing ether end groups.

In a 3 liter flask equipped with a mechanical stirrer, condenser and thermometer 400 grams of the sodium salt of poly(2,6-dimethyl-1,4-phenylene)ether having an intrinsic viscosity of 0.53, determined in chloroform at 23°C, 2 liters of distilled DMSO and 30 grams (0.15 mols) of N-methyl-4-nitrophthalimide were introcuced.

The mixture was heated at reflux (189°C) for 5 hours, then the solution was poured into 2 liters of methanol. The polymer separated by filtration was dissolved in 2.5 liters of chloroform and again reprecipitaded in methanol.

The operation was repeated twice. The polymer was then dried in a vacuum oven at 60°C. 375 grams of poly(2,6-dimethyl-1,4-phenylene)ether containing N-methyl-4-phthalimide end groups linked by ether link were obtained. The analysis of the polymer by ¹HNMR spectroscopy, ¹³CNMR and IR showed: at the IR, a band 1717 cm⁻¹ relating to the presence of the amidic - CO- group; at ¹³CNMR a peak at 152 ppm relating to the C atoms of the ether link, and at ¹HNMR a peak at about 3.1 ppm relating to the methyl protons at the imidic nitrogen. The functionalization degree quantitatively determined was about 33% by weight.

### Preparation of the composition.

Into a BRABENDER plastograph, equipped with a 50 ml cell and heated at 240°C, there was introduced a mixture, prepared at room temperature, consisting of:
- poly(2,6-dimethyl-1,4-phenylene)ether (PPE) having an intrinsic viscosity of 0.53 (in chloroform at 23°C), dissolved at 105°C in 350 cc. of toluene; in the amount reported in the Table;
- poly(2,6-dimethyl-1,4-phenylene)ether containing ether end groups above reported, in the amount reported in the Table, and
- a partially hydrogenated diblock copolymer of SEP type containing 37% by weight of styrene and sold by SHELL under the tradename KRATON^{R} G 1701, in the amount reported in the Table.

The BRABENDER mastication speed was programmed according to a cycle of 50 r.p.m. for a time of 1 minute and 100 r.p.m. for a time of 2 minutes.

The mixture leaving the first plastograph was fed to a second plastograph of the same type of the first one together with nylon 6 and poly(2,6-dimethyl-1,4-phenylene)ether in the following proportions:
- 33.3% by weight of the mixture leaving the first plastograph;
- 41% by weight of nylon 6 produced by the firm ECP EniChem Polimeri S.r.l. under the tradename "TERNIL^{R} B 27", having an average molecular weight of 18,000, and
- 25.7% by weight of poly(2,6,-dimethyl-1,4-phenylene)ether of the above reported type.

The operative conditions were the same of the first plastograph.

The resulting mixture was ground, compression molded at 260°C and characterized.

The characteristics of the thus obtained mixture are listed in the following Table.

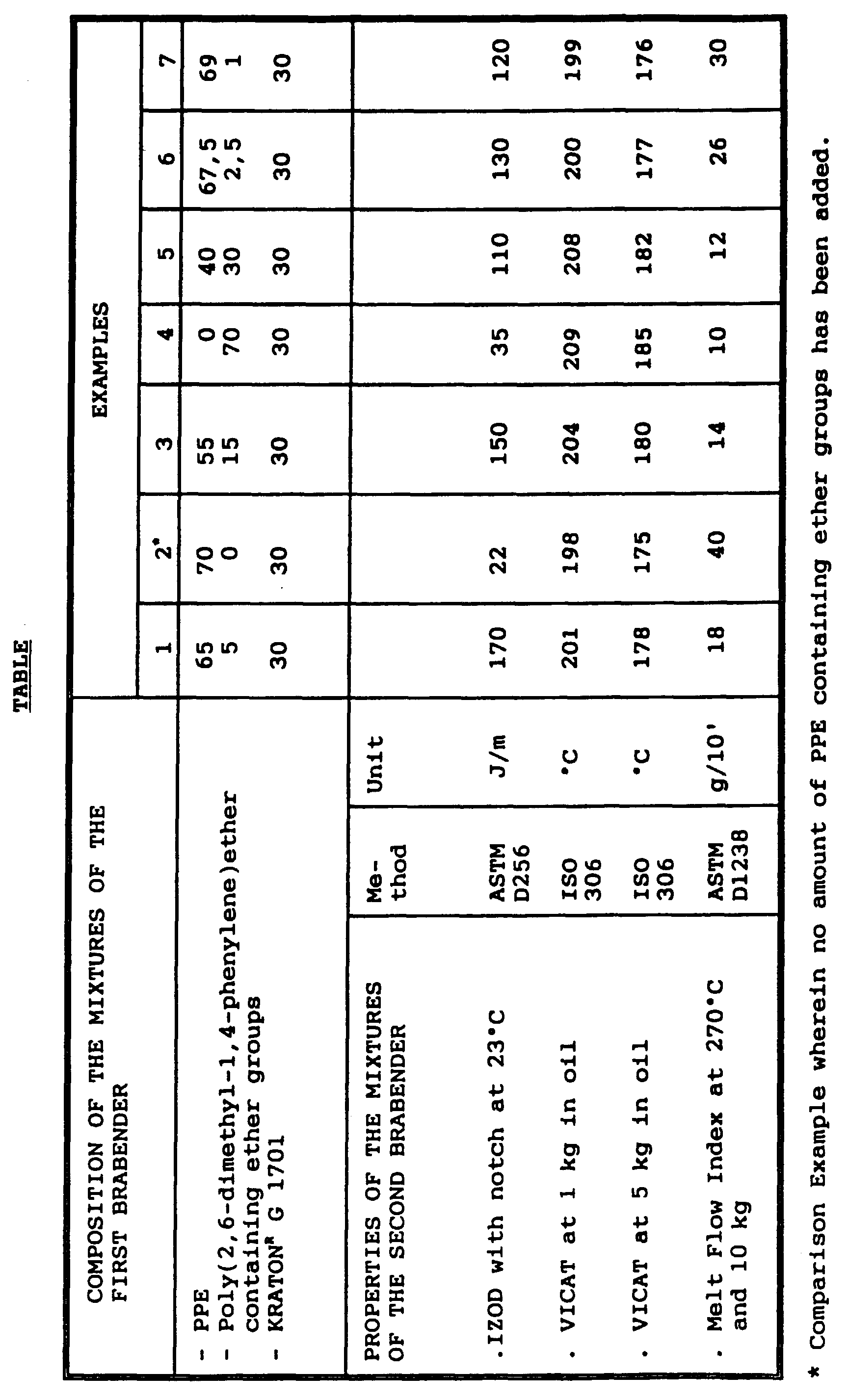

### EXAMPLE 8

Example 1 was repeated by substituting poly(2,6-dimethyl-1,4-phenylene)ether having an intrinsic viscosity of 0.53 by a poly(2,6-dimethyl-l,4-phenylene)ether having an intrinsic viscosity of 0.473.

The characteristics of the thus obtained mixture were:
. IZOD with notch at 23°C : 90 J/m
. VICAT at 1 Kg in oil : 195°C
. VICAT at 5 Kg in oil : 178°C
. Melt Flow Index at 270°C and 10 Kg : 20 g/10'

## Claims

1. Polyphenylene ether containing ether end groups of formula (I): 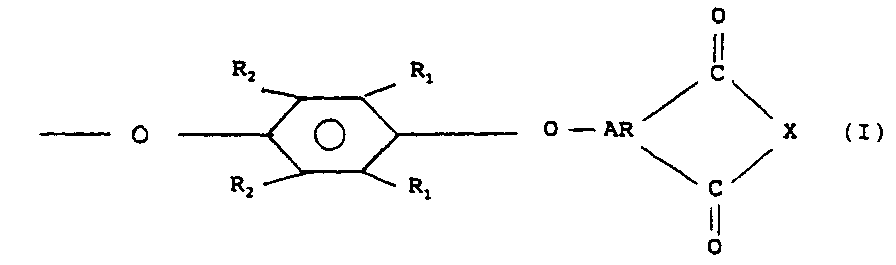 wherein:
each R₁ is independently a halogen atom, a primary or secondary alkyl radical containing from 1 to 7 carbon atoms, a substituted alkyl radical, phenyl, substituted phenyl, a C₁ - C₇ alkyloxy radical, or a haloalkyloxy wherein at least two carbon atoms separate the halogen and oxygen atoms;
each R₂ is independently hydrogen, a halogen atom, a primary or secondary alkyl radical containing from 1 to 7 carbon atoms, a substituted alkyl radical, phenyl, substituted phenyl, a C₁ - C₇ alkylcxy radical, ora halo-alkyloxy as defined for R₁;
AR is phenylene or an aromatic radical constituted by 2 or 3 condensed rings; and
X is N-R₃ wherein R₃ represents hydrogen, a monovalent organic radical selected from the group consisting of an alkyl group containing from 1 to 10 carbon atoms, preferably from 1 to 4 carbon atoms, a cycloalkyl radical containing from 3 to 8 carbon atoms and an aromatic radical having from 6 to 20 carbon atoms.

2. Polyphenylene ether according to claim 1, wherein R₃ is selected from the group consisting of hydrogen, methyl, ethyl, propyl, butyl, cyclohexyl, phenyl, tolyl, xylyl, naphthyl, 4-ethyl-phenyl.

3. A process fcr the preparation of polyphenylene ether containing ether end groups of formula (I), according to claim 1 or 2, consisting in reacting a polyphenylene ether salt with an aromatic nitro-derivative of formula: 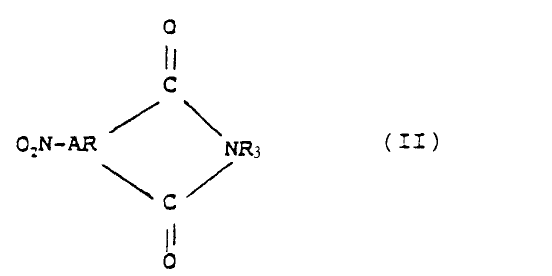 wherein AR and R₃ have the above reported meanings, in the presence of an organic polar aprotic solvent and at a temperature ranging from 100°C to the boiling temperature of the solvent.

4. A process according to claim 3, wherein the salt of the polyphenylene ether is a metal salt, preferably the sodium salt.

5. A process according to anyone of the preceding claims from 3 to 4, wherein the aromatic nitro-derivative of formula (II) is selected from the group consisting of N-methyl-4-nitro phthalimide, N-ethyl-4-nitro-phthalimide, N-propyl-4-nitro-phthalimide, and the corresponding products containing the nitro group in position 3, 5-nitro-N-methyl-1,8-naphthalimide and 5-nitro-N-methyl-2,3-naphthalimide.

6. A process according to anyone of the preceding claims from 3 to 5, wherein the aprotic organic polar solvent is dimethylsulphoxide.

7. A process according to anyone of the preceding claims from 3 to 6, wherein the molar ratio of the polyphenylene ether salt to the nitro-derivatives of formula (II) is comprised between 0.1 and 10, and the solvent/polyphenylene ether salt weight ratio is comprised between 1:1 and 10:1.

8. A thermoplastic composition comprising polyphenylene ether containing ether end groups of formula (I) according to anyone of the preceding claims 1 and 2.

9. The thermoplastic composition according to claim 8 comprising:
A. a polyphenylene ether;
B. a polyphenylene ether containing ether end groups of formula (I) according to anyone of the preceding claims 1 and 2; and
C. a nucleophilic engineering polymer selected from a polyester, a polyamide and an aromatic polycarbonate.

10. The thermoplastic composition according to claim 9, wherein the amount of the polyphenylene ether (B) containing ether end groups of formula (I) is comprised between 0.1 and 100 parts, preferably between 1 and 50 parts by weight with respect to 100 parts by weight of polyphenylene ether (A).

11. The thermoplastic composition according to anyone of the preceding claims 9 and 10, wherein the amount of the nucleophilic engineering polymer (C) is comprised between 5 and 95% by weight, preferably between 10 and 70% by weight with respect to the total weight of the composition.

12. The thermoplastic composition according to anyone of the preceding claims from 9 to 11, wherein the polyamide is nylon 6 or nylon 6,6 having a molecular weight higher than 10,000, preferably higher than 15,000 and up to 40,000.

13. The thermoplastic composition according to anyone of the preceding claims from 9 to 12, wherein the aromatic polycarbonate is based on 2,2-bis-(4-hydroxyphenyl)propane or on 2,2-bis-(3,5-dimethyl-4-hydroxyphenyl)propane and has an average molecular weight of at least 10,000 and preferably comprised between 20,000 and 80,000.

14. The thermoplastic composition according to anyone of the preceding claims from 9 to 13, wherein the polyphenylene ether is a polymer or a copolymer containing a plurality of structural units of formula: 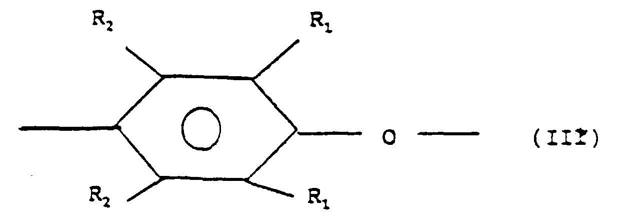 wherein R₁, and R₂ have the meanings reported in claim 1.

15. The thermoplastic composition according to claim 14, wherein the polyphenylene ether has the formula: 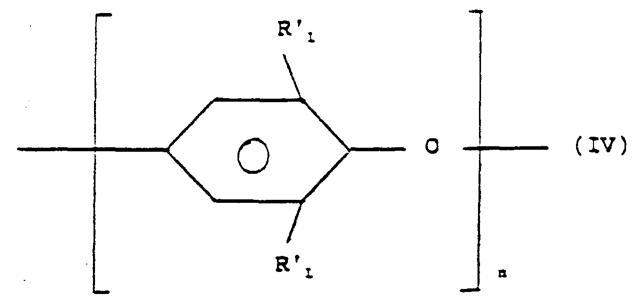 wherein R'₁, independently from each other, is an alkyl radical containing from I to 4 carbon atoms and "n" is at least 50 and preferably comprised between 60 and 600.

16. The thermoplastic composition according to anyone of the preceding claims from 8 to 15, comprising in addition a polymeric modifier in an amount comprised between 5 and 50 parts by weight of the composition.

17. The thermoplastic composition according to claim 16, wherein the polymeric modifier is selected from the group consisting of polyethylene, polypropylene, propylene-ethylene copolymers, copolymers of ethylene with other copolymerizable monomers, vinylaromatic monomer-hydrogenated, partially hydrogenated or not hydrogenated conjugated diene block polymers, polystyrene-ethylene-propylene rubbery block polymers (SEP), butadiene polymers, EPDM, core-shell graft copolymers and an olefinic elastomer containing a vinyl aromatic polymer, having preferably a molecular weight higher than 100,000 and up to 2,000,000, grafted thereon.

18. The thermoplastic composition according to anyone of the preceding claims from 9 to 17, containing in addition reinforcing additives, antiflame agents, dyestuffs, pigments, stabilizers, and/or lubricants.

19. The thermoplastic composition according to claim 18, wherein the reinforcing additive is selected from the group consisting of glass fibres, carbon fibres, organic or inorganic high modulus fibres and metal fibres, in amounts not exceeding 50% by weight and, preferably, not higher than 30% by weight with respect to the total composition.

## Patentansprüche

1. Polyphenylenether mit Etherendgruppen der Formel (I): 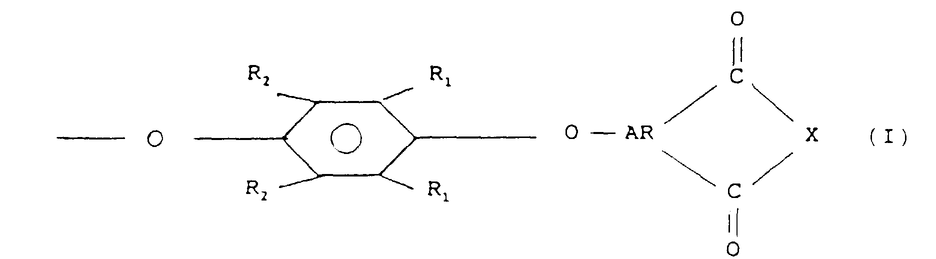 worin
R₁ unabhängig ein Halogenatom, ein primäres oder sekundäres Alkylradikal mit 1 bis 7 Kohlenstoffatomen, ein substituiertes Alkylradikal, Phenyl, substituiertes Phenyl, ein C₁ - C₇ Alkyloxyradikal oder ein Halogenalkyloxy ist, worin das Halogen- und das Sauerstoffatom mindestens zwei Kohlenstoffatome trennen;
jedes R₂ unabhängig Wasserstoff, ein Halogenatom, ein primäres oder sekundäres Alkylradikal mit 1 bis 7 Kohlenstoffatomen, ein substituiertes Alkylradikal, Phenyl, substituiertes Phenyl, ein C₁ - C₇ Alkyloxyradikal oder ein wie für R₁ definiertes Halogenalkyloxy ist;
AR Phenylen oder ein aus 2 oder 3 kondensierten Ringen bestehendes aromatisches Radikal ist und
X für N-R₃ steht, worin R₃ Wasserstoff oder ein einwertiges organisches Radikal ist, ausgewählt aus der Gruppe, die aus einer Alkylgruppe mit 1 bis 10 Kohlenstoffatomen, vorzugsweise mit 1 bis 4 Kohlenstoffatomen, einem Cycloalkylradikal mit 3 bis 8 Kohlenstoffatomen und einem aromatischen Radikal mit 6 bis 20 Kohlenstoffatomen besteht.

2. Polyphenylenether nach Anspruch 1, bei dem R₃ aus der Gruppe Wasserstoff, Methyl, Ethyl, Propyl, Butyl, Cyclohexyl, Phenyl, Tolyl, Xylyl, Naphthyl und 4-Ethylphenyl ausgewählt wird.

3. Verfahren zur Herstellung von Polyphenylenether mit Etherendgruppen der Formel (I) nach den Ansprüchen 1 oder 2, das das Umsetzen eines Polyphenylenethersalzes mit einem aromatischen Nitroderivat der Formel 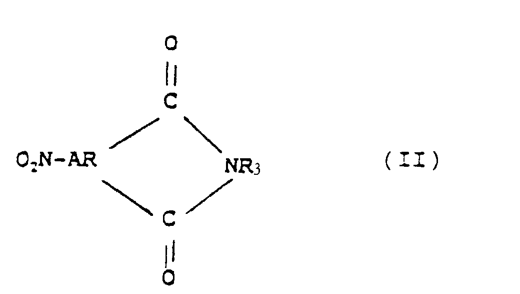 worin AR und R₃ wie oben definiert sind, in Gegenwart eines organischen polaren aprotischen Lösungsmittels und bei einer Temperatur im Bereich von 100 °C bis zur Siedetemperatur des Lösungsmittels umfaßt.

4. Verfahren nach Anspruch 3, bei dem das Polyethylenethersalz ein Metallsalz, vorzugsweise das Natriumsalz ist.

5. Verfahren nach einem der vorstehenden Ansprüche 3 und 4, bei dem das aromatische Nitroderivat der Formel (II) aus der Gruppe N-Methyl-4-nitrophthalimid, N-Ethyl-4-nitrophthalimid, N-Propyl-4-nitrophthalimid und den entsprechenden die Nitrogruppe in Position 3 enthaltenden Produkten, 5-Nitro-N-methyl-1,8-naphthalimid und 5-Nitro-N-methyl-2,3-naphthalimid ausgewählt wird.

6. Verfahren nach einem der vorstehenden Ansprüche 3 bis 5, bei dem das aprotische organische polare Lösungsmittel Dimethylsulphoxid ist.

7. Verfahren nach einem der vorstehenden Ansprüche 3 bis 6, bei dem das Molverhältnis zwischen dem Polyphenylenethersalz und den Nitroderivaten der Formel (II) im Bereich von 0,1 bis 10 und das Masseverhältnis Lösungsmittel/Polyphenylenethersalz im Bereich von 1:1 bis 10:1 liegt.

8. Thermoplastzusammensetzung, bestehend aus Polyphenylenether mit Etherendgruppen der Formel (I) nach einem der vorstehenden Ansprüche 1 und 2.

9. Thermoplastzusammensetzung nach Anspruch 8, bestehend aus:
A. einem Polyphenylenether;
B. einem Polyethylenether mit Etherendgruppen der Formel (I) nach einem der vorstehenden Ansprüche 1 und 2 und
C. einem nucleophilen Polymer für technische Anwendungen, ausgewählt unter einem Polyester, einem Polyamid und einem aromatischen Polycarbonat.

10. Thermoplastzusammensetzung nach Anspruch 9, bei der die Menge des Polyethylenethers (B) mit Etherendgruppen der Formel (I) zwischen 0,1 und 100 Masseteilen, vorzugsweise zwischen 1 und 50 Masseteilen je 100 Masseteile Polyphenylenether (A) liegt.

11. Thermoplastzusammensetzung nach einem der vorstehenden Ansprüche 9 und 10, bei der die Menge des nucleophilen Polymers für technische Anwendungen (C) zwischen 5 und 95 Masse%, vorzugsweise zwischen 10 und 70 Masse% bezogen auf die Gesamtmasse der Zusammensetzung liegt.

12. Thermoplastzusammensetzung nach einem der vorstehenden Ansprüche 9 bis 11, bei der das Polyamid Nylon 6 oder Nylon 6,6 mit einer relativen Molekülmasse von mehr als 10 000, vorzugsweise mehr als 15 000 bis 40 000 ist.

13. Thermoplastzusammensetzung nach einem der vorstehenden Ansprüche 9 und 12, bei der das aromatische Polycarbonat auf 2,2-Bis-(4-hydroxyphenyl)propan oder 2,2-Bis-(3,5-dimethyl-4-hydroxyphenyl)propan basiert und eine mittlere relative Molekülmasse von mindestens 10 000, vorzugsweise von 20 000 bis 80 000 hat.

14. Thermoplastzusammensetzung nach einem der vorstehenden Ansprüche 9 bis 13, bei der der Polyphenylenether ein Polymer oder ein Copolymer mit einer Anzahl von Struktureinheiten der Formel 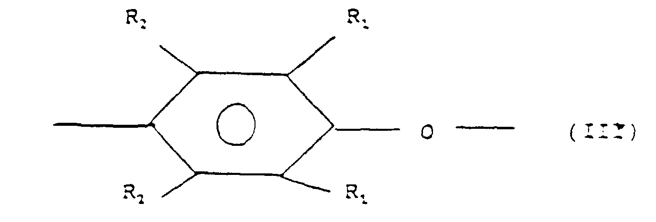 ist, worin R₁ und R₂ wie in Anspruch 1 definiert sind.

15. Thermoplastzusammensetzung nach Anspruch 14, bei der der Polyethylenether die Formel 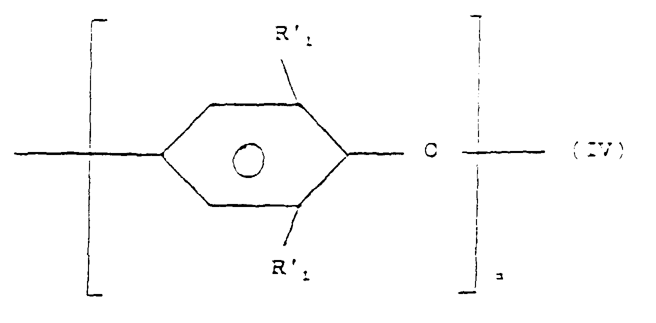 hat, worin es sich bei R'₁ unabhängig voneinander um ein Alkylradikal mit 1 bis 4 Kohlenstoffatomen handelt und "n" mindestens 50, vorzugsweise 60 bis 600, beträgt.

16. Thermoplastzusammensetzung nach einem der vorstehenden Ansprüche 8 bis 15, die zusätzlich einen Polymermodifikator in einer Menge von 5 bis 50 Masseteilen der Zusammensetzung umfaßt.

17. Thermoplastzusammensetzung nach Anspruch 16, bei der der Polymermodifikator aus der Gruppe, bestehend aus Polyethylen, Polypropylen, Propylen-Ethylen-Copolymeren, Copolymeren von Ethylen mit anderen copolymerisierbaren Monomeren, hydriertem vinylaromatischem Monomer, teilweise hydrierten oder nicht hydrierten konjugierten Dienblockpolymeren, Polystyren-Ethylen-Propylen-Kautschuk-Blockpolymeren (SEP), Butadienpolymeren, EPDM, Kern-Schalen-Pfropfcopolymeren und einem olefinischen Elastomer mit darin enthaltenem vinylaromatischem Polymer, das vorzugsweise eine relative Molekülmasse von mehr als 100 000 und bis zu 2 000 000 aufweist und das darauf gepfropft wurde, ausgewählt wird.

18. Thermoplastzusammensetzung nach einem der vorstehenden Ansprüche 9 bis 17, die zusätzlich Verstärkungsmittel, flammhemmende Zusatzmittel, Farbstoffe, Pigmente, Stabilisatoren und/oder Gleitmittel enthalten.

19. Thermoplastzusammensetzung nach Anspruch 18, bei der das Verstärkungsmittel aus der Gruppe Glasfasern, Kohlenstoffasern, organische oder anorganische Fasern mit hohem Elastizitätsmodul und Metallfasern in Mengen von höchstens 50 Masse% und vorzugsweise von höchstens 30 Masse% bezogen auf die Gesamtzusammensetzung ausgewählt wird.

## Revendications

1. Poly(phénylène éther) contenant des groupes terminaux éther de formule (I) 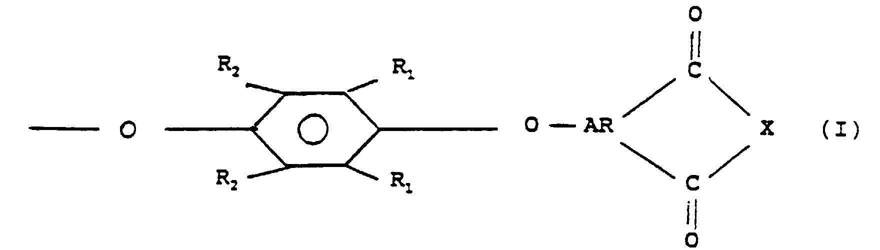 dans laquelle :
chaque R₁ est indépendamment un atome d'halogène, un radical alkyle primaire ou secondaire avec 1 à 7 atomes de carbone, un radical alkyle substitué, phényle, phényle substitué, un radical alkyloxy en C₁-C₇, ou un haloalcoxy dans lequel au moins deux atomes de carbone séparent les atomes d'halogène et d'oxygène ;
chaque R₂ est indépendamment l'hydrogène, un atome d'halogène, un radical alkyle primaire ou secondaire contenant 1 à 7 atomes de carbone, un radical alkyle substitué, phényle, phényle substitué, un radical alcoxy en C₁-C₇ ou un haloalcoxy tel que défini pour R₁ ;
AR est phénylène ou un radical aromatique constitué de 2 ou 3 cycles condensés ; et
X est N-R₃ où R₃ représente l'hydrogène, un radical monovalent pris dans le groupe constitué d'un groupe alkyle avec 1 à 10 atomes de carbone, de préférence 1 à 4 atomes de carbone et un radical aromatique avec 6 à 20 atomes de carbone.

2. Poly(phénylène éther) selon la revendication 1 où R₃ est pris dans le groupe comportant l'hydrogène, méthyle, éthyle, propyle, butyle, cyclohexyle, phényle, tolyle, xylyle, naphtyle, 4-éthylphényle.

3. Procédé de préparation de poly(phénylène éther) contenant des groupes terminaux éther de formule (I), selon la revendication 1 ou 2, consistant à faire réagir un sel de poly(phénylène éther) avec un dérivé aromatique nitro de formule 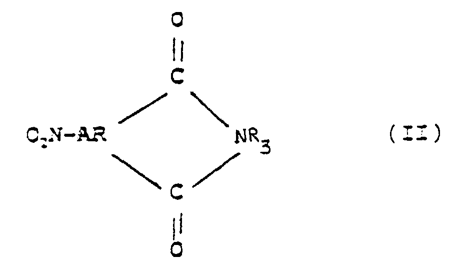 dans laquelle AR et R₃ ont les significations données ci-dessus, en présence d'un solvant organique aprotique polaire et à une température de 100°C au point d'ébullition du solvant.

4. Procédé conformément à la revendication 3, où le sel du poly(phénylène éther) est un sel métallique, de préférence le sel sodique.

5. Procédé selon l'une quelconque des revendications précédentes 3 à 4, où le dérivé nitroaromatique de formule (II) est pris dans le groupe comportant le N-méthyl-4-nitro-phtalimide, le N-éthyl-4-nitro-phtalimide, le N-propyl-4-nitro-phtalimide et les produits correspondants contenant le groupe nitro sur la position 3, le 5-nitro-N-méthyl-1,8-naphtalimide et le 5-nitro-N-méthyl-2,3-naphtalimide.

6. Procédé selon l'une quelconque des revendications précédentes 3 à 5, où le solvant aprotique polaire est le diméthylsulfoxyde.

7. Procédé selon l'une quelconque des revendications précédentes 3 à 6, où le rapport molaire du sel de poly(phénylène éther) aux dérivés nitro de formule (II) est compris entre 0,1 et 10 et le rapport pondéral du solvant/sel de poly(phénylène éther) est compris entre 1:1 et 10:1.

8. Composition thermoplastique comprenant le poly(phénylène éther) comportant des groupes éther terminaux de formule (I) selon l'une quelconque des revendications précédentes 1 et 2.

9. Composition thermoplastique selon la revendication 8 comprenant :
A. un poly(phénylène éther)
B. un poly(phénylène éther) comprenant des groupes éther terminaux de formule (I) selon l'une quelconque des revendications précédentes 1 et 2 ; et
C. un polymère technique nucléophile pris parmi un polyester, un polyamide et un polycarbonate aromatique.

10. Composition thermoplastique selon la revendication 9, où la quantité du poly(phénylène éther) (B) comprenant des groupes éther terminaux de formule (I) est comprise entre 0,1 et 100 parties en poids, de préference entre 1 et 50% en poids par rapport à 100 parties en poids de poly(phénylène éther) (A).

11. Composition thermoplastique selon l'une quelconque des revendications précédentes 9 et 10, où la quantité du polymère technique nucléophile (C) est comprise entre 5 et 95% en poids, de préférence entre 10 et 70% en poids par rapport au poids total de la composition.

12. Composition thermoplastique selon l'une quelconque des revendications précédentes 9 à 11, où le polyamide est le nylon 6 ou le nylon 6,6 avec une masse moléculaire supérieure à 10 000, de préférence supérieure à 15 000 et allant jusqu'à 40 000.

13. Composition thermoplastique selon l'une quelconque des revendications précédentes 9 et 12, où le polycarbonate aromatique est à base du 2,2-bis-(4-hydroxyphényl)propane ou de 2,2-bis-(3,5-diméthyl-4-hydroxyphényl)propane et a une masse moléculaire d'au moins 10 000 et de préférence comprise entre 20 000 et 80 000.

14. Composition thermoplastique selon l'une quelconque des revendications précédentes 9 et 13, où le poly(phénylène éther) est un polymère ou copolymère comprenant un grand nombre de motifs de structure de formule : 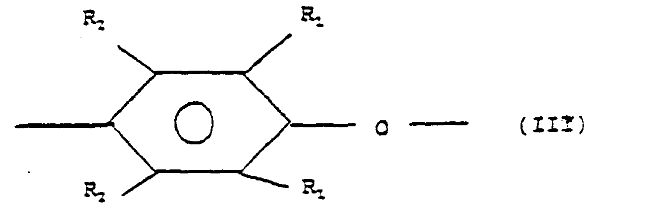 dans laquelle R₁ et R₂ ont les significations données dans la revendication 1.

15. Composition thermoplastique selon l'une quelconque des revendications précédentes 9 et 14, où le poly(phénylène éther) répond à la formule : 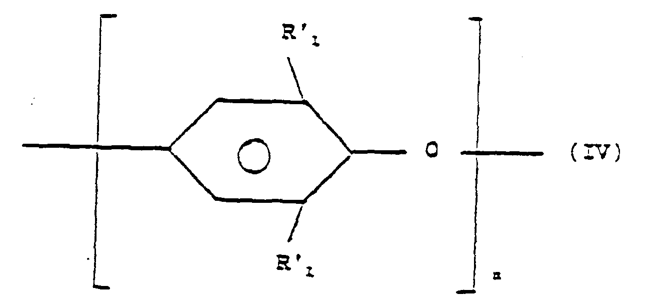 où les radicaux R₁', indépendamment l'un de l'autre, sont un radical alkyle avec 1 à 4 atomes de carbone et "n" est d'au moins 50 et de préférence compris entre 60 et 600.

16. Composition thermoplastique selon l'une quelconque des revendications précédentes 8 et 15, comprenant de plus un modificateur polymère dans une quantité comprise entre 5 et 50 parties en poids de la composition.

17. Composition thermoplastique selon la revendication 6, où le modificateur polymère est pris dans le groupe comportant le polyéthylène, le polypropylène, des copolymères du propylène-éthylène, des copolymères de l'éthylène avec d'autres monomères copolymérisables, des polymères séquencés diéniques conjugués d'un monomère vinylaromatique hydrogéné, partiellement hydrogéné ou non hydrogéné, des polymères séquencés élastomères du polystyrène-éthylène-propylène (SEP), des polymères du butadiène, EPDM, des copolymères greffés noyau-enveloppe et un élastomère oléfinique comportant greffé un polymère vinylaromatique ayant une masse moléculaire de préférence supérieure à 100 000 et jusqu'à 2,000 000.

18. Composition thermoplastique selon l'une quelconque des revendications précédentes 9 et 17, comportant en plus des additifs de renfort, des agents ignifugeants, des colorants, des pigments, des stabilisants et/ou lubrifiants.

19. Composition thermoplastique selon la revendication 18, où l'additif renforçant est pris dans le groupe comportant des fibres de verre, des fibres de carbone, des fibres organiques et inorganiques à haut module et des fibres métalliques, dans une quantité qui n'est pas supérieure à 50% en poids et de préférence, pas supérieure à 30% en poids par rapport à la totalité de la composition.
